# EUROPEAN PATENT SPECIFICATION

(11) **EP 3 674 944 B1**
(45) Date of publication and mention of the grant of the patent: **15.12.2021**
(21) Application number: 19200950.4
(22) Date of filing: 02.10.2019
(51) Int. Cl.: G06F 21/55, G06F 21/57, H04L 29/06

(54) **SYSTEM AND METHOD FOR ATTACK RESILIENCY IN VERIFYING DIGITAL SIGNATURES OF FILES**
SYSTEM UND VERFAHREN ZUR ANGRIFFSSICHERHEIT BEI DER VERIFIZIERUNG DIGITALER SIGNATUREN VON DATEIEN
SYSTÈME ET PROCÉDÉ DE RÉSILIENCE AUX ATTAQUES POUR VÉRIFIER LES SIGNATURES NUMÉRIQUES DE FICHIERS

(30) Priority: 28.12.2018 RU 2018147244; 06.09.2019 US 201916563207
(43) Date of publication of application: 01.07.2020
(73) Proprietor: AO Kaspersky Lab, Moscow 125212 (RU)
(72) Inventor: LADIKOV, Andrey V., Moscow 125212 (RU); DOMASHENKO, Alexey A., Moscow 125212 (RU); CHEPEL, Dmitry M., Moscow 125212 (RU); KOZLOV, Sergey V., Moscow 125212 (RU); GADELSHIN, Tagir T., Moscow 125212 (RU)
(74) Representative: Sloboshanin, Sergej

(56) References cited:
- EP-A1- 3 029 594
- US-A1- 2015 156 024
- US-B1- 8 499 150

## Description

### TECHNICAL FIELD

Embodiments relate generally to computerized digital signatures, and more specifically, responding to attacks on signature verification tools.

### BACKGROUND

As malicious applications become more prevalent, the need for improved antivirus technologies aimed at protecting user data and user devices against unauthorized access and use is needed. In this continuous race for improvement of antivirus applications, developers face, among other challenges, the important task of reducing two types of errors in detecting malicious files. A Type I error (false positive) is recognizing a non-malicious file as malicious. A Type II error is a failure to recognize a malicious file as malicious.

In order to reduce the number of Type I errors, developers of antivirus applications use various techniques so that a file recognized as malicious using, for example, heuristic analysis, would not be deleted or quarantined. One of such technique includes checking a file using databases of trusted files. Such a check searches for an ID (for example, a MD5 or SHA-1 checksum) of the file recognized as malicious in the database of trusted files, and, if the same ID is found there, the decision to recognize the file as malicious is cancelled. Another method for reducing Type I errors is a check of the electronic digital signature, ("DS" or simply a "digital signature") of a file recognized as malicious.

In order to check digital signatures, antivirus applications often use DS check tools built in the operating system ("OS"), such as CryptoAPI. For example, U.S. Application Pub. No. 2017/0257361A1 describes an approach to the verification of executable code based on the results of a check of the DS of the file containing the code. However, this approach has a number of drawbacks, such as a relatively low speed of the DS check and vulnerability to attacks by offenders. Therefore, a need exists to respond to attacks on DS check tools.

EP 3 029 594 A1 refers to a method, a system and a computer program product for performing antivirus checking of files based on a level of trust of their digital certificates. The method includes obtaining a digital certificate of a digital signature of a file; determining a validity of the obtained digital certificate; assigning a level of trust to the digital certificate based on the determined validity or invalidity of the digital certificate of the file; based on the assigned level of trust of the digital certificate of the file, determining what antivirus checking method to perform on the file; and performing the determined antivirus checking method on the file.

From US 2015/156024 A1 a computer implemented method is known to prevent security problems in the use of digital certificates in code signing. According to the method, at least one software file is signed by a software distributor via a first server using a digital certificate with a digital signature. The digital certificate to be used is previously recorded in a second server in communication with the first server, the digital certificate to be recorded is provided by the software distributor upon a registration of the latter in the second server and includes information obtained from a trust certificate chain associated to the digital certificate when performing the registration. The second server generates, upon a request made by the software distributor, a hashstamp of the signed software file.

US 8 499 150 B1 describes a method for assigning a trust level to a digitally-signed file. The method comprises receiving signing information identifying a certificate used to sign the file and determining whether the certificate is compromised. Responsive to determining that the certificate is compromised, the method compares a discovery date of the file with a compromise date of the certificate. The method further generates trust data assigning the trust level to the file responsive to the comparison.

### SUMMARY

Embodiments of the present application substantially meet the aforementioned needs of the industry. In particular, embodiments described herein provide systems and methods for responding to attacks on DS check tools to alternatively and accurately categorize files.

In an embodiment, a system for responding to attack on a user computing device comprises a certificate database configured to store a plurality of certificates, a trusted certificate database configured to store trusted certificate data, and a data transfer device including computing platform of at least one processor and memory operably coupled to the at least one processor; and instructions that, when executed on the computing platform, cause the computing platform to implement a check tool configured to: detect an attack on the user computing device against at least one system tool for verifying digital signatures of files by identifying a modification or replacement of the at least one system tool or a component used by the at least one system tool, obtain at least one file, the at least one file to be analyzed by the at least one system tool for verifying digital signatures of files, the at least one file including a digital signature, the digital signature including a DS certificate, wherein the DS certificate includes issuing center data and DS certificate data, determine the DS certificate is valid by checking that the DS certificate has a required certificate integrity, determine the digital signature is valid by checking that the at least one file has a required file integrity and the DS certificate is valid, and if the DS certificate is valid, determine the DS certificate is trusted by finding the trusted certificate data related to the DS certificate data.

In an embodiment, a method for responding to attack on a user computing device comprises detecting an attack on the user computing device against at least one system tool for verifying digital signatures of files by identifying a modification or a replacement of the at least one system tool or a component used by the at least one system tool; obtaining at least one file, the at least one file to be analyzed by the at least one system tool for verifying digital signatures of files, the at least one file including a digital signature, the digital signature including a DS certificate, wherein the DS certificate includes issuing center data and DS certificate data; determining the DS certificate is valid by checking that the DS certificate has a required certificate integrity; determining the digital signature is valid by checking that the at least one file has a required file integrity and the DS certificate is valid; and if the DS certificate is valid, determining the DS certificate is trusted by finding the trusted certificate data related to the DS certificate data.

In an embodiment, a computing device comprises at least one processor and memory operably coupled to the at least one processor; and instructions that, when executed on the processor, cause the processor to implement a check tool configured to detect an attack on the user computing device against at least one system tool for verifying digital signatures of files, obtain at least one file, the at least one file to be analyzed by the at least one system tool for verifying digital signatures of files, the at least one file including a digital signature, the digital signature including a DS certificate, determine the DS certificate is valid, determine the digital signature is valid, if the DS certificate is valid, determine the DS certificate is trusted, and categorize the at least one file as non-trusted when the digital signature is invalid or the DS certificate is invalid or non-trusted; and a security assurance tool configured to restrict access to the user computing device to the at least one file when the at least one file is categorized as non-trusted by the check tool.

The above summary is not intended to describe each illustrated embodiment or every implementation of the subject matter hereof. The figures and the detailed description that follow more particularly exemplify various embodiments.

### BRIEF DESCRIPTION OF THE DRAWINGS

Subject matter hereof may be more completely understood in consideration of the following detailed description of various embodiments in connection with the accompanying figures, in which:
FIG. 1 is a block diagram of system for verifying a digital signature of a file, according to an embodiment.
FIG. 2 is a block diagram of a system for verifying a digital signature of a file, according to another embodiment.
FIG. 3 is a flowchart of a method for verifying a digital signature of a file, according to an embodiment.
FIG. 4 is a flowchart of a method for responding to an attack on computing device, according to an embodiment.
FIG. 5 is a block diagram of a computer system configured to implement embodiments.

While various embodiments are amenable to various modifications and alternative forms, specifics thereof have been shown by way of example in the drawings and will be described in detail. It should be understood, however, that the intention is not to limit the claimed inventions to the particular embodiments described. On the contrary, the intention is to cover all modifications, equivalents, and alternatives of the subject matter as defined by the claims.

### DETAILED DESCRIPTION OF THE DRAWINGS

The following definitions and concepts are used throughout the description in particular embodiments.

For example, in an embodiment, a malicious application is an application capable of harming a computer or computer user data (in other words, a computer system); for example, a network worm, a keyboard spy, or a computer virus. Harm can consist of unauthorized access to the computer's resources, including data stored in the computer, for the purpose of theft, as well as misuse of the resources, such as the unauthorized storing of data, or performing of calculations, etc.

In an embodiment, a trusted application is an application which does not harm the computer or its user. An application can be considered trusted if the application is developed by a trusted software developer, if the application is downloaded from a trusted source (for example, a site included in a database of trusted sites), or when the application's ID (or other data allowing to definitely identify the application - for example, the hash sum of the application file) is stored in a database of trusted applications. A manufacturer ID such as a digital certificate can also be stored in a trusted applications database.

In an embodiment, a non-trusted application is an application which is not trusted but is not recognized as malicious, either. For example, such trustworthiness or maliciousness evaluations can be made by an antivirus application. A non-trusted application can be subsequently recognized as malicious; for example, using an antivirus check.

In an embodiment, a malicious file is a file which is a component of a malicious application and contains program code (e.g. executable or interpreted code).

In an embodiment, a non-trusted file is a file which is a component of a non-trusted application and contains program code (e.g. executable or interpreted code).

In an embodiment, a trusted file is a file which is a component of a trusted application.

In an embodiment, a check of a file's DS can be defined by checking whether the exact file being checked was signed by the owner of the certificate attached to the DS. At a first stage of the check, the decrypted file checksum from the file's DS is compared with the file checksum obtained using the algorithm specified in the DS certificate. The checksum from the DS file is checked using the open key specified in the DS certificate. If the checksums match, the file's integrity is confirmed. The next stage of the check is to confirm the validity of the DS certificate, which is performed the same way: embodiments check the integrity of the certificate of the file's DS and the validity of the certificate of the relevant certifying center which issued the certificate of the file's DS (this process can continue up to the root certificate). A certificate is considered to be valid if the integrity is confirmed and if the certificate of the certifying center that issued the certificate is valid as well. Otherwise, the certificate is invalid. If a DS certificate is considered to be valid and the file is considered to have a required integrity, the DS is considered to be valid. In other embodiments, if a DS certificate is considered to be valid and the file is not modified after signing, the DS is considered to be valid. Otherwise, the DS is considered to be invalid. In certain embodiments, a DS certificate is defined by a certificate attached to a file's DS (a "leaf certificate"), which allows for the checking of the validity of the file's DS. In certain embodiments, a certificate means a certificate in accordance with the X.509 standard.

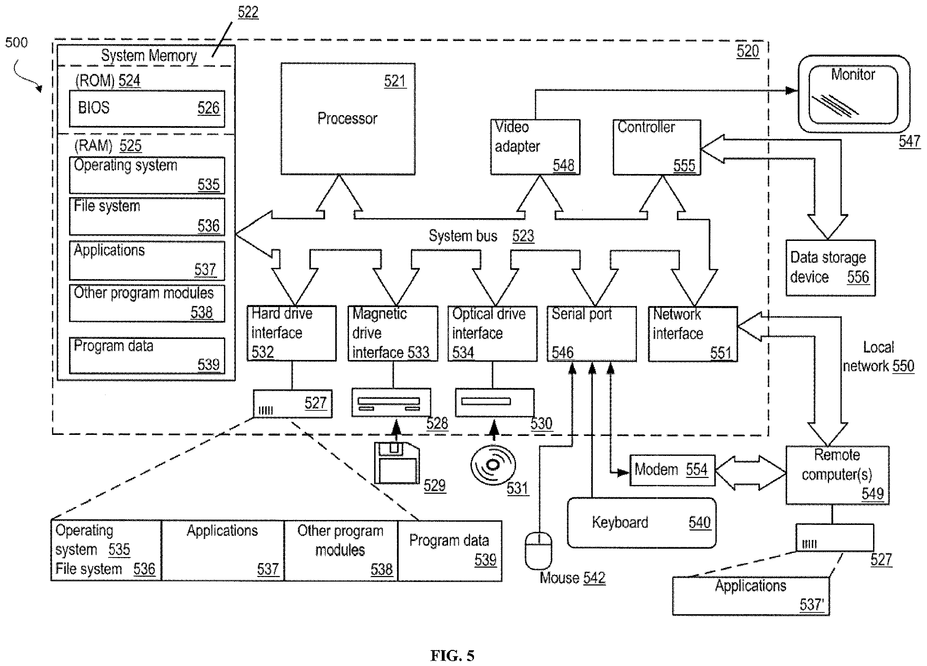

In an embodiment, tools of a system for checking a file's DS in this invention mean actual devices, systems, components and groups of components designed using hardware, such as application-specific integrated circuits (ASICs) or field-programmable gate arrays (FPGAs), or, for example, as a combination of software and hardware, such as a microprocessor system and a set of program instructions, as well as neurosynaptic chips. The functionality of the above-mentioned system tools can be provided by hardware only, or as a combination where the functionality of the system tools is provided partially by software and partially by hardware. In some embodiments, some or all of the tools can be implemented using the processor of computerized device (for example, the one shown in FIG. 5). Also, the system's components can be designed either within a single computer or distributed between multiple linked computers.

In an embodiment, a DS check system includes a check tool and a certificate database. In another embodiment, the system includes a security assurance tool.

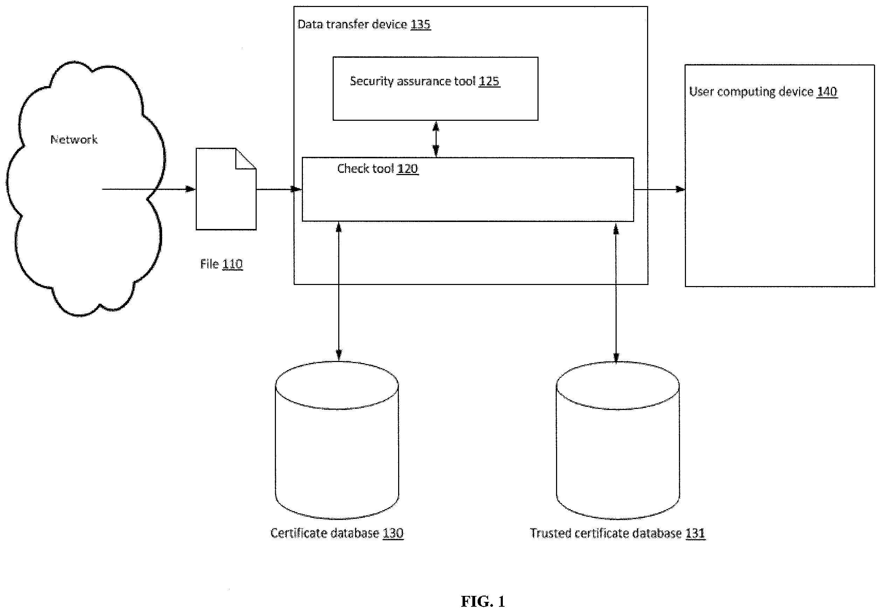

Referring to FIG. 1, a block diagram of system for verifying a digital signature of a file is depicted, according to an embodiment. In an embodiment, the system comprises a check tool and one or more databases. In an embodiment, check tool 120 is located on a data transfer device 135, a computing device designed to send data (for example, data coming from the network) to a user computer 140. In an embodiment, the data sent to user computer 140 can be a file 110. Data transfer device 135 can be a router or any other computing device, like a proxy server. In one embodiment, data transfer device 135 can be a computing device designed to store data for subsequent distribution. For example, data transfer device 135 can comprise an update server that receives update files for multiple computers of a company's network for subsequent transfer of the files to the computers of the company's employees.

In an embodiment, the system further comprises a security assurance tool 125. As depicted in FIG. 1, security assurance tool 125 is also located on data transfer device 135.

In an embodiment, the system further comprises a certificate database 130 and a trusted certificate database 131, each configured to be operable coupled with check tool 120. Databases 130 and 131 can be located either on device 135 or on a remote server linked (e.g. over a network) with device 135 using a network.

File 110 can comprise a file that has a DS. For example, file 110 can be an executable file or a script file. In another embodiment, the executable file is an executable file for an operating system from the following families: Windows or Unix, and in particular, Windows OS, Ubuntu Linux OS, MacOS, etc.

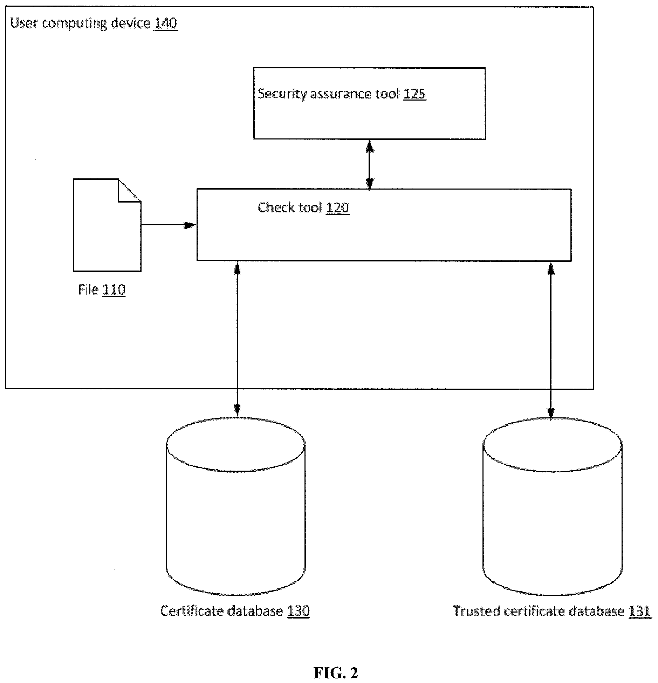

Referring to FIG. 2, a block diagram of a system for verifying a digital signature of a file is depicted, according to another embodiment. Specifically, FIG. 2 depicts an alternative embodiment for a check system, where security assurance tool 125 and the check tool 120 are located on user computing device 140. Also, certificate database 130 and trusted certificate database 131 linked with the check tool 120 can be located either on computing device 140 or on a remote server linked with the computing device 140 using a network.

Referring again to both FIGS. 1-2, certificate database 130 is configured to store certificates. In an embodiment, certificate database 130 also stores information for each certificate indicating whether the certificate is revoked. In certain embodiments, certificate database 130 stores certificates (and, accordingly, information about them) for multiple (at least two) operating systems, such as Windows and Unix families, for example: Windows, Ubuntu Linux, or MacOS. Therefore, certificate database 130 can store certificates for various operating systems, which is not possible if the DS check system tools of each operating system are used separately as in traditional systems. Further, in an embodiment, certificate database 130 stores only root certificates and certificates of certifying centers.

Trusted certificate database 131 is configured to store trusted certificates. In an alternative embodiment, trusted certificate database 131 does not store the certificates themselves, but their IDs (for example, the SHA-1 checksum). In a particular embodiment, and similar to certificate database 130, trusted certificate database 131 is configured to store information about certificates for multiple OSs.

In the context of this disclosure, a "certificate for an OS" (or simply "OS certificate") means a certificate which can be present in system storage of certificates of one OS (or one OS family) and is not present in the system storage of another family's OS. This situation is possible for several reasons.

For example, OS developers may not store certificates whose integrity is determined using encryption algorithms that the developers consider to be not cryptographically strong. In one particular example, Windows OS developers plan to stop using the SHA-1 encryption algorithm (and, accordingly, the certificates where this algorithm is specified) when checking the validity of DSs in the Windows 10 OS.

In another example, support in system storage of certificates having cryptographically strong encryption algorithms for checking validity of DSs can be either absent or added by OS developers with a delay. The Windows 7 OS provides one such example, where, initially, only the SHA-1 encryption algorithm was supported, while the SHA-256 support was added only with the SP1 update.

In another example, OS developers may not add certificates issued to developers of software related to certain subsystems to the system storage. For example, the root certificates used for checking DSs of the Metro application, which appeared only in the Windows 8 OS, are absent in the system storages of Windows 7 OS certificates.

In another example, developers of MacOS do not add certificates (specifically, root certificates) used to check DSs of Windows executable files to Mac system storages (and vice versa). In other words, the system storage of one OS may not contain certificates (specifically, root certificates) used to check executable files for other OSs.

Many other reasons for certificate (e.g. root certificate) exclusion from system storage exist, as the examples provided herein are not limiting.

As discussed above, in certain embodiments, a system storage of certificates can include a database containing certificates and used by the DS check system tools for checking DSs such as file DSs. The meaning of "OS developers" in the above example includes information technology specialists who determine the content of the system storages of certificates and the methods for checking DSs using a system storage of certificates (specifically, the encryption algorithms used to check validity of DSs and certificates). Further, in certain embodiments, the data stored in databases 130 and 131 can be added, modified and deleted by such information technology specialists.

Referring again to FIGS. 1-2, check tool 120 is designed to check the DS of file 110 in order to recognize the DS as valid, and to check the certificate of the file's DS 110 in order to recognize the certificate as valid, as well as trusted. Validity of a DS is checked in two stages, which can be performed concurrently and independently of each other.

A first stage checks the integrity of file 110. For this, tool 120 compares the decrypted checksum of the file 110 from the DS of file 110 with the checksum of file 110 obtained using the algorithm specified in the DS's certificate. The checksum from the DS of file 110 is checked using the open key specified in the DS's certificate. If the checksums match, check tool 120 confirms the file's integrity, i.e. determines that the file 110 is not modified.

A second stage of the DS check of file 110 checks for validity of the DS's certificate. In an embodiment, check tool 120 checks the certificate's validity by building a chain of certificates, for example, up to the root certificate, from the certificates available in certificate database 130. The certificate of the DS of file 110 (as well as any other certificate) is recognized as valid if the certificate of the DS of file 110 has the appropriate integrity (the check of a certificate's integrity is similar to the above-described check of a file's integrity), and if the certificate of the certifying center which issued the certificate of the DS of file 110 is valid as well. In an embodiment, all certificates used to check the certificate of the DS of file 110 are stored in certificate database 130. A sequential check for validity of certificates comprises the building of a chain of certificates. For example, if check tool 120, when checking the certificate of the DS of file 110, can build a chain of certificates up to the root certificate stored in certificate database 130, i.e. each certificate in the chain has the appropriate integrity and the last certificate in the chain is the root one, the certificate of the DS of file 110 is recognized as valid. Otherwise, the certificate of the DS of file 110 is not recognized to be valid (e.g. is recognized to be invalid). In an embodiment, if the certificate of the DS of file 110 is invalid, check tool 120 recognizes the file as non-trusted.

If the certificate of the DS of file 110 is valid, check tool 120 can recognize the certificate of the DS of file 110 as trusted if the following conditions are met: the certificate of the DS (or the ID of such certificate - for example, the SHA-1 or SHA-256 checksum, or the vector of values which definitely identifies the certificate) is present in trusted certificate database 131, or the certificate of the certifying center which issued the certificate is trusted. In an embodiment, an additional condition must be met for the certificate of a DS to be recognized as trusted. Particularly, certificate database 130 must not contain the information that the certificate was revoked. In yet another embodiment, an additional condition must be met for the certificate of a DS to be recognized as trusted. Particularly, the certificate of the DS must not be expired (the duration specified in the certificate itself has not ended).

In an embodiment, for a certificate to be recognized as valid, it is sufficient that certificate database 131 contains information about the certificate (for example, the certificate ID). In this case, recognition of the certificate of the DS of file 110 is not performed as a separate stage. Rather, whether the DS's certificate is trusted is confirmed at the stage of checking the validity of the certificate of the DS of the file 110.

In an embodiment, check tool 120 is also configured to determine the category of file 110 (or to classify the file into a category; in other words, to recognize the file as belonging to a category). Tool 120 can recognize file 110 as trusted (determines that file 110 belongs to the category of trusted files, in other words, classifies file 110 into a category of trusted files) if the file's DS is valid and the DS's certificate is trusted.

By using database 130 instead of DS-checking system tools to check the validity of the DS's certificate, and, accordingly, the validity of the DS of file 110, check tool 120 has advantages over traditional systems. For example, unlike a system storage of certificates that is a part of an OS and stores certificates used for the signatures of only certain types of files corresponding to that OS (for example, a system storage of certificates of the Windows OS does not store certificates, including root certificates, for checks of the DSs of executable files of Unix-type systems), database 130 can contain certificates used for the signatures of files corresponding to any operating system. In one embodiment, a file corresponds to an OS if it is an executable file for the OS. This ensures accuracy, and particularly, reduction of Type I errors by the determination of a certificate of the DS of file 110 being recognized as valid, and, accordingly, the DS of file 110 being recognized as valid, and the category of file 110 being determined based on the check of the DS and of the certificate of the DS of file 110.

Security assurance tool 125 is configured to protect device 140 against non-trusted files. In one embodiment, protection includes prohibiting the execution of non-trusted files or prohibiting the opening of such files. In yet another embodiment, security assurance tool 125 prevents transfer of non-trusted files to computing device 140. For example, security assurance tool 125 can block the transfer of file 110 to computing device 140. In another embodiment, security assurance tool 125, deletes or quarantines non-trusted files and so that the non-trusted files never reach computing device 140.

In an embodiment, security assurance tool 125 is further configured to detect an attack carried out against DS-checking system tools on user computing device 140. DS-checking system tools can be software tools provided along with the operating system and designed to check DS certificates and/or the DSs themselves. For example, the Wintrust.dll library acts as such a tool for the Windows OS, while Keychain or GateKeeper software components act as such tools for the MacOS operating system. In one embodiment, an attack on DS-checking system tools can mean modification or replacement of one or multiple system program modules that check DS certificates. In this case, by its detection of an attack on DS certificate checking tools, security assurance tool 125 is also configured to determine one or multiple system program modules that check DS certificates as malicious.

As described herein, and has been noted, certain capabilities for checking certificates of DSs using system tools can be restricted due to a limited set of certificates available to the DS certificate-checking system tools (for example, a limited set of certificates in the Windows certificate storage or the Keychain certificate storage for MacOS).

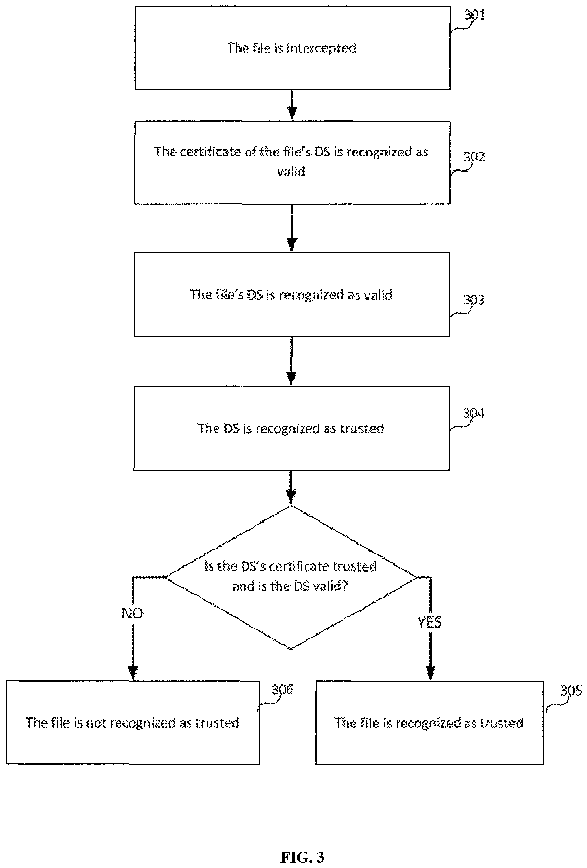

Referring to FIG. 3, a flowchart of a method for verifying a digital signature of a file is depicted, according to an embodiment. The method in FIG. 3 can be implemented by, for example, the system of FIG. 1.

At 301, check tool 120 locates or intercepts a file, such as file 110, which is intended for further transfer. In this case, file 110 is transferred on a network through data transfer device 135, which contains check tool 120, to user computing device 140. In an embodiment, intercepting file 110 includes receiving data from file 110 or related to file 110 (for example, its bytecode). In another embodiment, intercepting file 110 further includes suspending (using security assurance tool 125) the transfer of file 110 to the computing device 140, until, for example, file 110 is recognized as trusted.

Subsequently, a check of the file's DS is performed. Particularly, at 302, check tool 120 checks the certificate of the DS of file 110. The certificate of the DS is recognized as valid if the DS's certificate has the appropriate integrity and if the certificate of the certifying center which issued the DS's certificate is valid. Validity of certificates can be checked using certificate database 130, which can contain certificates of certifying centers with an indication of whether each certificate is trusted. Therefore, a trusted certificate from certificate database 130 can be considered valid. The process of checking validity for a certificate chain can continue up to the first trusted certificate or up to the root certificate in the certificate chain.

At 303, check tool 120 determines the file's DS to be valid if the DS certificate is valid and if the file 110 has the appropriate integrity. Next, at 304, the certificate of the DS of the file is recognized as trusted if it is valid and if certificate database 130 contains information that the DS certificate is trusted or if the certificate of the certifying center which issued the DS certificate is trusted. The execution of 303 and 304 are independent of each other and can be performed in any order.

If the DS certificate is trusted and if the DS is valid, then, at 305, file 110 is recognized as trusted. In other words, a file 110 is categorized - the file is determined to belong to the trusted files category. Otherwise, at 306, file 110 is categorized as untrusted.

In response to the categorization, if file 110 is not recognized as trusted, security assurance tool 125 can halt any further transfer to user computing device 140, delete all data related to file 110 (e.g. located on data transfer device 135), or quarantine file 110.

The method implemented by this system has several advantages over system tool-based certificate checking solutions. For example, because certificate database 130 contains certificates for various operating systems, embodiments have fewer false responses when determining the category of file 110, when compared to similar systems that check only certificates for a single family of operating systems. More particularly, an executable file, which has a valid (and trusted) certificate for MacOS, will not be recognized as trusted using only a Windows OS certificate storage. Accordingly, embodiments solve this problem; namely reduction of the number of Type I errors (false positives) when determining the file category by storing certificates for various OS families. The importance of this solution is made clear by situations in which check tool 120 is located on a router or a proxy server of a corporate network, which can include many user computing devices 140 having various operating systems and in which data transfer device 135 transfers files 110 with DS certificates belonging to different operating systems.. Check tool 120 and security assurance tool 125 can "filter" the files downloaded from the network (e.g. block the transfer of files to computing devices 140 included in the corporate network).

In yet another embodiment, tools 120 and 125 are located on the user computing device. The present method allows for the reduction of the number of false responses when determining the category of file 110 signed with a DS and intended to be launched on a virtual machine installed on device 140, with an OS different from the one controlling the user computing device 140. The advantage is achieved by the fact that the check tool can correctly check the certificate of an executable file for an OS different from the one controlling the user computing device 140, because databases 130 and 131 contain information on certificates for various operating systems.

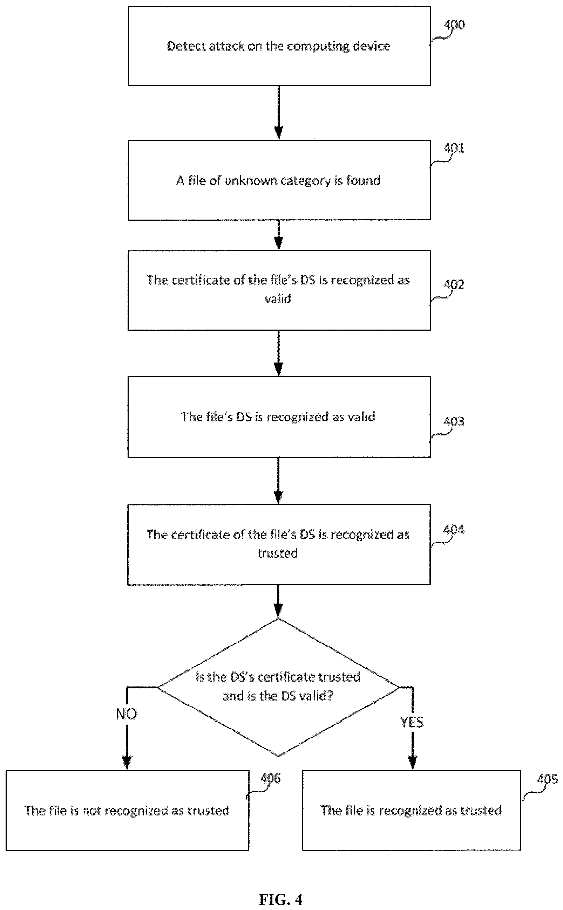

Referring to FIG. 4, a flowchart of a method for responding to an attack on computing device is depicted, according to an embodiment. The method in FIG. 4 can be implemented by, for example, the system of FIG. 2.

At 400, security assurance tool 125 detects an attack on user computing device 140 against one or more system tools for checking DSs of files. Next, at 401, security assurance tool 125 finds file 110, which is uncategorized. For example, security assurance tool 125 is configured to search for an ID of file 110 (for example, the SHA-1 or MD5 checksum) in a files database (not shown in the figures). The files database can comprise data indicating that file 110 belongs to a category of files, for example: trusted or non-trusted files. If security tool 125 cannot determine the category of file 110 using a request sent to the files database, subsequent method processing is performed. In this case, file 110 can be any new or modified file on computing device 140. For example, a file can be new or modified having been downloaded from the network, created on that computing device, or obtained by modifying a file already present on computing device 140.

Next, the file's DS check is performed. At 402, check tool 120 checks the certificate of the DS of file 110. The certificate of the DS is recognized as valid if the DS's certificate is has the appropriate integrity and if the certificate of the certifying center that issued the DS's certificate is valid. Validity of certificates can be checked using certificate database 130, which can contain certificates of certifying centers with indications of whether each certificate is trusted. Therefore, a trusted certificate from certificate database 130 is considered valid. The process of checking validity for a certificate chain can continue up to the first valid certificate or up to the root certificate in the certificate chain.

At 403, check tool 120 recognizes the file's DS as valid if the DS certificate is valid and if the file 110 is has the required integrity. Next, at 404, the certificate of the DS of the file is recognized as trusted if it is valid and if certificate database 130 contains information that the DS certificate is trusted or if the certificate of the certifying center which issued the DS certificate is trusted. In embodiments, 403 and 404 are independent of each other and can be performed in any order.

If the DS certificate is trusted and if the DS is valid, then, at 405, file 110 is recognized as trusted. In other words, a file 110 is categorized - the file is determined to belong to the trusted files category. Otherwise, at 406, file 110 is categorized as untrusted.

In response to the categorization, if file 110 is not recognized as trusted, security assurance tool 125 can delete data related to file 110 (e.g. the file's data) located on the user computing device 140, or quarantine file 110.

The method depicted in FIG. 4 has several advantages over system tool-based certificate checking solutions. For example, in an attack on DS-checking system tools, the DS-checking system tools will not be able to correctly check the certificates of file DSs, which makes it impossible to accurately determine the categories of the files signed with DSs based on whether the DS is valid and whether the certificate is trusted, because the very components of DS-checking system tools can be substituted or damaged and can function incorrectly. An example of such an attack is a substitution of components of DS-checking system tools, so that the security assurance tool, specifically, an antivirus application, would recognize malicious files as trusted ones, by determining their category on the basis of information on DS validity and DS certificate validity provided by compromised DS-checking system tools. Embodiments described herein solve the above-mentioned problem by detecting an attack on DS-checking system tools, and, if such an attack is detected, determining the category of file 110 using the certificate database 130, which provides true information as to whether the certificates are valid and trusted.

In an embodiment, an attack on DS-checking system tools can be part of a more complicated attack; for example, an Advanced Persistent Threat. In this case, it is critical that security assurance tool 125 protect the computing device 140 against such an attack. Accordingly, security assurance tool 125 can initiate a process of determining the categories of all files that appeared on the device 140 during the attack on DS-checking system tools. For example, a time duration can be within 24 hours from the date of the attack (and not the date when the attack was detected). The date of the attack can be determined for example, by the date of modification of a DS-checking system tool component. In this case, files that were not recognized as trusted using the check tool 120 as part of the check initiated by the security assurance tool 125 are recognized as potentially malicious by tool 125. Such files can be sent to a remote server for more detailed analysis, for example, using classifying algorithms or neuron networks, or for analysis by an information security specialist. Accordingly, the decision to recognize every such file is received by tool 125 from a remote server, and, if a file is recognized as malicious, security assurance tool 125 detects an advanced persistent threat and takes necessary steps in relation to the file recognized as malicious (e.g. deletion or quarantining).

In another embodiment, the systems and methods described herein have an advantage not only when DS-checking system tools are under attack, but also when it is not at all possible to use DS-checking system tools for any reason: such as before components of such DS-checking system tools are loaded to the RAM (e.g. when Windows OS is starting and the Wintrust.dll is not yet loaded to RAM).

The use of check tool 120 for checking the validity of the DS of the file 110, in addition to having the above-described advantages (reduction of the number of Type I errors when a valid DS is recognized as invalid because the system storage does not have certificates for files of multiple OSs), also increases the speed of validity checks.

One of the reasons for greater speed of the DS validity check using tool 120 is because the DS-checking system tools (in particular, Windows OS tools) load lists of revoked certificates in order to check the validity of certificates and to determine whether a certificate is revoked. In these traditional methods, the entire list of revoked certificates is analyzed for presence of the certificate being checked. In contrast, check tool 120 checks whether a certificate is revoked by simply calling the certificate database 130, where each certificate can be marked as revoked. Therefore, check tool 120 checks the validity of the DS of file 110 faster than DS-checking system tools.

Another reason for the faster speed of the DS validity check using check tool 120 is because database 130 does not store duplicates of certificates. For example, in traditional DS-checking system tools, for example, Windows OS tools, when a duplicate of a certificate is added to the Windows certificate storage, the certificate is re-issued with an identical open key. In contrast, the building and checking of multiple certificate chains for a single certificate of the DS of the file 110 is prevented.

Another reason for the faster speed of the DS validity check using check tool 120 is because DS-checking system tools can be expandable. For example, in the Windows OS, the CryptoAPI interface can be used by outside applications that supplement the logic of the DS certificate validity by performing their own checks, thereby slowing down the making of a decision regarding the validity of a DS.

Referring to FIG. 5, a diagram illustrating in greater detail a computer system 500 on which aspects of the invention as described herein may be implemented according to various embodiments is depicted.

The computer system 500 can comprise a computing device such as a personal computer 520 includes one or more processing units 521, a system memory 522 and a system bus 523, which contains various system components, including a memory connected with the one or more processing units 521. In various embodiments, the processing units 521 can include multiple logical cores that are able to process information stored on computer readable media. The system bus 523 is realized as any bus structure known at the relevant technical level, containing, in turn, a bus memory or a bus memory controller, a peripheral bus and a local bus, which is able to interact with any other bus architecture. The system memory can include non-volatile memory such as Read-Only Memory (ROM) 524 or volatile memory such as Random Access Memory (RAM) 525. The Basic Input/Output System (BIOS) 526 contains basic procedures ensuring transfer of information between the elements of personal computer 520, for example, during the operating system boot using ROM 524.

Personal computer 520, in turn, has a hard drive 527 for data reading and writing, a magnetic disk drive 528 for reading and writing on removable magnetic disks 529, and an optical drive 530 for reading and writing on removable optical disks 531, such as CD-ROM, DVD-ROM and other optical media. The hard drive 527, the magnetic drive 528, and the optical drive 530 are connected with system bus 523 through a hard drive interface 532, a magnetic drive interface 533 and an optical drive interface 534, respectively. The drives and the corresponding computer information media represent energy-independent means for storage of computer instructions, data structures, program modules and other data on personal computer 520.

The system depicted includes hard drive 527, a removable magnetic drive 529 and a removable optical drive 530, but it should be understood that it is possible to use other types of computer media, capable of storing data in a computer-readable form (solid state drives, flash memory cards, digital disks, random-access memory (RAM), etc.), connected to system bus 523 through a controller 555.

The computer 520 comprises a file system 536, where the recorded operating system 535 is stored, as well as additional program applications 537, other program engines 538 and program data 539. The user can input commands and information into the personal computer 520 using input devices (keyboard 540, mouse 542). Other input devices (not shown) can also be used, such as: a microphone, a joystick, a game console, a scanner, etc. Such input devices are usually connected to the computer system 520 through a serial port 546, which, in turn, is connected to a system bus, but they can also be connected in a different way - for example, using a parallel port, a game port or a Universal Serial Bus (USB). The monitor 547 or another type of display device is also connected to system bus 523 through an interface, such as a video adapter 548. In addition to monitor 547, personal computer 520 can be equipped with other peripheral output devices (not shown), such as speakers, a printer, etc.

Personal computer 520 is able to work in a network environment; in this case, it uses a network connection with one or several other remote computers 549. Remote computer(s) 549 is (are) similar personal computers or servers, which have most or all of the above elements, noted earlier when describing the substance of personal computer 520 shown in FIG. 5. The computing network can also have other devices, such as routers, network stations, peering devices or other network nodes.

Network connections can constitute a Local Area Network (LAN) 550 and a World Area Network (WAN). Such networks are used in corporate computer networks or in corporate intranets, and usually have access to the Internet. In LAN or WAN networks, personal computer 520 is connected to the Local Area Network 550 through a network adapter or a network interface 551. When using networks, personal computer 520 can use a modem 554 or other means for connection to a world area network, such as the Internet. Modem 554, which is an internal or an external device, is connected to system bus 523 through serial port 546. It should be clarified that these network connections are only examples and do not necessarily reflect an exact network configuration, i.e. in reality there are other means of establishing a connection using technical means of communication between computers.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognize that the subject matter hereof may comprise fewer features than illustrated in any individual embodiment described above. The embodiments described herein are not meant to be an exhaustive presentation of the ways in which the various features of the subject matter hereof may be combined. Accordingly, the embodiments are not mutually exclusive combinations of features; rather, the various embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted.

## Claims

1. A system for responding to attack on a user computing device (140), the system comprising:
a certificate database (130) configured to store a plurality of certificates;
a trusted certificate database (131) configured to store trusted certificate data, and
a data transfer device (135) including:
computing platform (500) of at least one processor (521) and memory (522) operably coupled to the at least one processor (521); and
instructions that, when executed on the computing platform (500), cause the computing platform (500) to implement:
a check tool (120) configured to:
detect an attack on the user computing device (140) against at least one system tool for verifying digital signatures of files by identifying a modification or a replacement of the at least one system tool or a component used by the at least one system tool,
obtain at least one file (110), the at least one file (110) to be analyzed by the at least one system tool for verifying digital signatures of files, the at least one file (110) including a digital signature, the digital signature including a DS certificate, wherein the DS certificate includes issuing center data and DS certificate data,
determine the DS certificate is valid by checking that the DS certificate has a required certificate integrity,
determine the digital signature is valid by checking that the at least one file (110) has a required file integrity and the DS certificate is valid, and
if the DS certificate is valid, determine the DS certificate is trusted by finding the trusted certificate data related to the DS certificate data.

2. The system of claim 1, wherein the check tool (120) is further configured to:
search a files database for an ID of the at least one file (110);
determine whether the at least one file (110) is trusted or non-trusted based on the search of the files database.

3. The system of claim 2, wherein the check tool (120) is further configured to categorize the at least one file (110) as non-trusted when the digital signature is invalid or the DS certificate is invalid or non-trusted, and
wherein the data transfer device (135) further includes instructions that, when executed on the computing platform (500), cause the computing platform (500) to implement a security assurance tool (125) configured to restrict access to a user computing device (140) to the at least one file, when the at least one file is categorized as non-trusted by the check tool (120), by at least one of:
prohibiting transfer of the at least one file (110) to the user computing device (140),
deleting the at least one file (110), or
quarantining the at least one file (110).

4. The system of one of the preceding claims,
wherein the check tool is further configured to:
determine the DS certificate is valid by validating the issuing center certificate with the plurality of certificates.

5. The system of claim 1, wherein checking that the at least one file (110) has the required file integrity includes:
obtaining a decrypted digital signature checksum from the digital signature;
obtaining a checksum algorithm from the DS certificate;
calculating a file checksum of the at least one file (110) using the checksum algorithm;
comparing the digital signature checksum with the file checksum using a public key in the DS certificate; and
if the digital signature checksum matches the file checksum, determining that the at least one file (110) has the required file integrity.

6. The system of one of claims 4 to 5, wherein validating the issuing center certificate includes:
building a chain of certificates from the plurality of certificates;
checking that each of the plurality of certificates in the chain of certificates has a required certificate integrity;
checking that one of the plurality of certificates in the chain of certificates is related to the issuing center certificate;
checking that a root certificate is the last certificate in the chain of certificates; and
if each of the plurality of certificates in the chain of certificates has the required certificate integrity, one of the plurality of certificates in the chain of certificates is related to the issuing center certificate, and the root certificate is the last certificate in the chain of certificates, determining that the issuing center certificate is valid.

7. The system of one of claims 1 to 6, wherein finding the trusted certificate data related to the DS certificate data includes:
identifying the DS certificate data in the trusted certificate data, wherein the DS certificate data includes at least one of the DS certificate, an ID of the DS certificate, or a vector of values identifying the DS certificate; or
identifying a certifying center certificate from a certifying center that issued the DS certificate in the trusted certificate data.

8. The system of claim 7, wherein the certificate database (130) is further configured to store revocation data about the plurality of certificates and wherein determining the DS certificate is trusted further comprises:
comparing the DS certificate to the revocation data to determine the DS certificate has not expired.

9. The system of claim 1, wherein the check tool (120) is further configured to detect the attack by determining the at least one system tool or the component used by the at least one system tool is malicious.

10. The system of claim 3, wherein the security assurance tool (125) is further configured to:
determine a timeframe that the attack occurred;
determine a suspicious set of files based on the timeframe; and
invoke the check tool (120) to categorize the suspicious set of files.

11. A method for responding to attack on a user computing device (140), the method comprising:
detecting an attack on the user computing device (140) against at least one system tool for verifying digital signatures of files by identifying a modification or a replacement of the at least one system tool or a component used by the at least one system tool;
obtaining at least one file (110), the at least one file (110) to be analyzed by the at least one system tool for verifying digital signatures of files, the at least one file (110) including a digital signature, the digital signature including a DS certificate, wherein the DS certificate includes issuing center data and DS certificate data;
determining the DS certificate is valid by checking that the DS certificate has a required certificate integrity;
determining the digital signature is valid by checking that the at least one file (110) has a required file integrity and the DS certificate is valid; and
if the DS certificate is valid, determining the DS certificate is trusted by finding the trusted certificate data related to the DS certificate data.

12. The method of claim 11, further comprising:
searching a files database for an ID of the at least one file (110),
determining whether the at least one file (110) is trusted or non-trusted based on the search of the files database.

13. The method of claims 11 or 12, further comprising:
categorizing the at least one file (110) as non-trusted when the digital signature is invalid or the DS certificate is invalid or non-trusted; and
restricting access to a user computing device (140) to the at least one file (110)
when the at least one file (110) is categorized as non-trusted, by at least one of:
prohibiting transfer of the at least one file (110) to the user computing device (140),
deleting the at least one file (110), or
quarantining the at least one file (110).

## Patentansprüche

1. System zum Antworten auf einen Angriff auf eine Benutzercomputervorrichtung (140), wobei das System umfasst:
eine Zertifikatedatenbank (130), die dazu konfiguriert ist, eine Vielzahl von Zertifikaten zu speichern;
eine Datenbank vertrauenswürdiger Zertifikate (131), die dazu konfiguriert ist, Daten vertrauenswürdiger Zertifikate zu speichern, und
eine Datentransfervorrichtung (135) umfassend:
eine Computerplattform (500) von wenigstens einem Prozessor (521) und einem Speicher (522), der mit dem wenigstens einen Prozessor (521) funktionell gekoppelt ist; und
Befehle, die, wenn sie auf der Computerplattform (500) ausgeführt werden, bewirken, dass die Computerplattform (500) implementiert:
ein Überprüfungstool (120), das dazu konfiguriert ist:
einen Angriff auf die Benutzercomputervorrichtung (140) gegen wenigstens ein Systemtool zum Verifizieren digitaler Signaturen von Dateien durch Identifizieren einer Modifikation oder eines Ersetzens des wenigstens einen Systemtools oder einer durch das wenigstens eine Systemtool verwendeten Komponente zu detektieren,
wenigstens eine Datei (110) zu erhalten, wobei die wenigstens eine Datei (110) durch das wenigstens eine Systemtool zum Verifizieren digitaler Signaturen von Dateien zu analysieren ist, wobei die wenigstens eine Datei (110) eine digitale Signatur umfasst, wobei die digitale Signatur ein DS-Zertifikat umfasst, wobei das DS-Zertifikat Ausgabestellendaten und DS-Zertifikatdaten umfasst,
zu bestimmen, dass das DS-Zertifikat gültig ist, durch Überprüfen, dass das DS-Zertifikat eine erforderliche Zertifikatintegrität aufweist,
zu bestimmen, dass die digitale Signatur gültig ist, durch Überprüfen, dass die wenigstens eine Datei (110) eine erforderliche Dateiintegrität aufweist und das DS-Zertifikat gültig ist, und
falls das DS-Zertifikat gültig ist, durch Finden der Daten vertrauenswürdiger Zertifikate, die auf die DS-Zertifikatdaten bezogen sind, zu bestimmen, dass das DS-Zertifikat vertrauenswürdig ist.

2. System nach Anspruch 1, wobei das Überprüfungstool (120) ferner dazu konfiguriert ist:
eine Dateiendatenbank nach einer ID der wenigstens einen Datei (110) zu durchsuchen;
basierend auf der Durchsuchung der Dateiendatenbank zu bestimmen, ob die wenigstens eine Datei (110) vertrauenswürdig oder nicht-vertrauenswürdig ist.

3. System nach Anspruch 2, wobei das Überprüfungstool (120) ferner dazu konfiguriert ist, die wenigstens eine Datei (110) als nicht-vertrauenswürdig zu kategorisieren, wenn die digitale Signatur ungültig ist oder das DS-Zertifikat ungültig oder nicht-vertrauenswürdig ist, und
wobei die Datentransfervorrichtung (135) ferner Befehle umfasst, die, wenn sie auf der Computerplattform (500) ausgeführt werden, bewirken, dass die Computerplattform (500) ein Sicherheitsgewährleistungstool (125) implementiert, das dazu konfiguriert ist, wenn die wenigstens eine Datei durch das Überprüfungstool (120) als nicht-vertrauenswürdig kategorisiert wird, den Zugriff für eine Benutzercomputervorrichtung (140) auf die wenigstens eine Datei zu beschränken durch wenigstens eines von:
Verbieten eines Transfers der wenigstens einen Datei (110) auf die Benutzercomputervorrichtung (140),
Löschen der wenigstens einen Datei (110), oder
Unter-Quarantäne-Stellen der wenigstens einen Datei (110).

4. System nach einem der vorhergehenden Ansprüche,
wobei das Überprüfungstool ferner dazu konfiguriert ist:
durch Validieren des Ausgabestellenzertifikats bei der Vielzahl von Zertifikaten zu bestimmen, dass das DS-Zertifikat gültig ist.

5. System nach Anspruch 1, wobei das Überprüfen, dass die wenigstens eine Datei (110) die erforderliche Dateiintegrität aufweist, umfasst:
Erhalten einer entschlüsselten Digitalsignaturprüfsumme aus der digitalen Signatur;
Erhalten eines Prüfsummenalgorithmus aus dem DS-Zertifikat;
Berechnen einer Dateiprüfsumme der wenigstens einen Datei (110) unter Verwenden des Prüfsummenalgorithmus;
Vergleichen der Digitalsignaturprüfsumme mit der Dateiprüfsumme unter Verwenden eines öffentlichen Schlüssels in dem DS-Zertifikat; und
falls die Digitalsignaturprüfsumme mit der Dateiprüfsumme zusammenpasst, Bestimmen, dass die wenigstens eine Datei (110) die erforderliche Dateiintegrität aufweist.

6. System nach einem der Ansprüche 4 bis 5, wobei das Validieren des Ausgabestellenzertifikats umfasst:
Bilden einer Kette von Zertifikaten aus der Vielzahl von Zertifikaten;
Überprüfen, dass jedes der Vielzahl von Zertifikaten in der Kette von Zertifikaten eine erforderliche Zertifikatintegrität aufweist;
Überprüfen, dass eines der Vielzahl von Zertifikaten in der Kette von Zertifikaten auf das Ausgabestellenzertifikat bezogen ist;
Überprüfen, dass ein Root-Zertifikat das letzte Zertifikat in der Kette von Zertifikaten ist; und
falls jedes der Vielzahl von Zertifikaten in der Kette von Zertifikaten die erforderliche Zertifikatintegrität aufweist, eines der Vielzahl von Zertifikaten in der Kette von Zertifikaten auf das Ausgabestellenzertifikat bezogen ist, und das Root-Zertifikat das letzte Zertifikat in der Kette von Zertifikaten ist, Bestimmen, dass das Ausgabestellenzertifikat gültig ist.

7. System nach einem der Ansprüche 1 bis 6, wobei das Finden der Daten vertrauenswürdiger Zertifikate, die auf die DS Zertifikatdaten bezogen sind, umfasst:
Identifizieren der DS-Zertifikatdaten in den Daten vertrauenswürdiger Zertifikate, wobei die DS-Zertifikatdaten das DS-Zertifikat, eine ID des DS-Zertifikats und/oder einen Wertevektor umfassen, der das DS-Zertifikat identifiziert; oder
Identifizieren eines Zertifizierungsstellenzertifikats von einer Zertifizierungsstelle, die das DS-Zertifikat ausgegeben hat, in den Daten vertrauenswürdiger Zertifikate.

8. System nach Anspruch 7, wobei die Zertifikatedatenbank (130) ferner dazu konfiguriert ist, Widerrufsdaten über die Vielzahl von Zertifikaten zu speichern, und wobei das Bestimmen, dass das DS-Zertifikat vertrauenswürdig ist, ferner umfasst:
Vergleichen des DS-Zertifikats mit den Widerrufsdaten, um zu bestimmen, dass das DS-Zertifikat nicht abgelaufen ist.

9. System nach Anspruch 1, wobei das Überprüfungstool (120) ferner dazu konfiguriert ist, durch Bestimmen, dass das wenigstens eine Systemtool oder die durch das wenigstens eine Systemtool verwendeten Komponente schädlich ist, den Angriff zu detektieren.

10. System nach Anspruch 3, wobei das Sicherheitsgewährleistungstool (125) ferner dazu konfiguriert ist:
einen Zeitrahmen zu bestimmen, in dem der Angriff stattgefunden hat;
basierend auf dem Zeitrahmen einen verdächtigen Satz von Dateien zu bestimmen; und
das Überprüfungstool (120) dazu aufzurufen, den verdächtigen Satz von Dateien zu kategorisieren.

11. Verfahren zum Antworten auf einen Angriff auf eine Benutzercomputervorrichtung (140), wobei das Verfahren umfasst:
Detektieren eines Angriffs auf die Benutzercomputervorrichtung (140) gegen wenigstens ein Systemtool zum Verifizieren digitaler Signaturen von Dateien durch Identifizieren einer Modifikation oder eines Ersetzens des wenigstens einen Systemtools oder einer durch das wenigstens eine Systemtool verwendeten Komponente;
Erhalten wenigstens einer Datei (110), wobei die wenigstens eine Datei (110) durch das wenigstens eine Systemtool zum Verifizieren digitaler Signaturen von Dateien zu analysieren ist, wobei die wenigstens eine Datei (110) eine digitale Signatur umfasst, wobei die digitale Signatur ein DS-Zertifikat umfasst, wobei das DS-Zertifikat Ausgabestellendaten und DS-Zertifikatdaten umfasst,
Bestimmen, dass das DS-Zertifikat gültig ist, durch Überprüfen, dass das DS-Zertifikat eine erforderliche Zertifikatintegrität aufweist,
Bestimmen, dass die digitale Signatur gültig ist, durch Überprüfen, dass die wenigstens eine Datei (110) eine erforderliche Dateiintegrität aufweist und das DS-Zertifikat gültig ist, und
falls das DS-Zertifikat gültig ist, Bestimmen, dass das DS-Zertifikat vertrauenswürdig ist, durch Finden der Daten vertrauenswürdiger Zertifikate, die auf die DS-Zertifikatdaten bezogen sind.

12. Verfahren nach Anspruch 11, ferner umfassend:
Durchsuchen einer Dateiendatenbank nach einer ID der wenigstens einen Datei (110),
Bestimmen, ob die wenigstens eine Datei (110) vertrauenswürdig oder nicht-vertrauenswürdig ist, basierend auf der Durchsuchung der Dateiendatenbank.

13. Verfahren nach den Ansprüchen 11 oder 12, ferner umfassend:
Kategorisieren der wenigstens einen Datei (110) als nicht-vertrauenswürdig, wenn die digitale Signatur ungültig ist oder das DS-Zertifikat ungültig oder nicht-vertrauenswürdig ist; und
Beschränken des Zugriffs für eine Benutzercomputervorrichtung (140) auf die wenigstens eine Datei (110), wenn die wenigstens eine Datei (110) als nicht-vertrauenswürdig kategorisiert wird, durch wenigstens eines von:
Verbieten eines Transfers der wenigstens einen Datei (110) auf die Benutzercomputervorrichtung (140),
Löschen der wenigstens einen Datei (110), oder
Unter-Quarantäne-Stellen der wenigstens einen Datei (110).

## Revendications

1. Système pour répondre à une attaque sur un dispositif informatique d'utilisateur (140), le système comprenant :
une base de données de certificats (130) qui est configurée pour stocker une pluralité de certificats ;
une base de données de certificats de confiance (131) qui est configurée pour stocker des données de certificats de confiance ; et
un dispositif de transfert de données (135) qui inclut :
une plate-forme informatique (500) qui est constituée par au moins un processeur (521) et une mémoire (522) qui est couplée de manière opérationnelle à l'au moins un processeur (521) ; et
des instructions qui, lorsqu'elles sont exécutées sur la plate-forme informatique (500), ont pour effet que la plate-forme informatique (500) met en œuvre :
un outil de vérification (120) qui est configuré pour :
détecter une attaque sur le dispositif informatique d'utilisateur (140) à l'encontre d'au moins un outil système dont l'objet est de vérifier des signatures numériques de fichiers en identifiant une modification ou un remplacement de l'au moins un outil système ou d'un composant qui est utilisé par l'au moins un outil système;
obtenir au moins un fichier (110), l'au moins un fichier (110) étant destiné à être analysé par l'au moins un outil système dont l'objet est de vérifier des signatures numériques de fichiers, l'au moins un fichier (110) incluant une signature numérique, la signature numérique incluant un certificat DS, dans lequel le certificat DS inclut des données de centre émetteur et des données de certificat DS ;
déterminer que le certificat DS est valide en vérifiant que le certificat DS présente une intégrité de certificat requise ;
déterminer que la signature numérique est valide en vérifiant que l'au moins un fichier (110) présente une intégrité de fichier requise et que le certificat DS est valide ; et
si le certificat DS est valide, déterminer que le certificat DS est digne de confiance en trouvant les données de certificat de confiance qui concernent les données de certificat DS.

2. Système selon la revendication 1, dans lequel l'outil de vérification (120) est en outre configuré pour :
rechercher dans une base de données de fichiers un ID de l'au moins un fichier (110) ; et
déterminer si l'au moins un fichier (110) est digne de confiance ou non sur la base de la recherche dans la base de données de fichiers.

3. Système selon la revendication 2, dans lequel l'outil de vérification (120) est en outre configuré pour catégoriser l'au moins un fichier (110) comme étant non digne de confiance lorsque la signature numérique est invalide ou que le certificat DS est invalide ou non digne de confiance ; et dans lequel :
le dispositif de transfert de données (135) inclut en outre des instructions qui, lorsqu'elles sont exécutées sur la plate-forme informatique (500), ont pour effet que la plate-forme informatique (500) met en œuvre un outil de garantie de sécurité (125) qui est configuré pour restreindre l'accès par un dispositif informatique d'utilisateur (140) à l'au moins un fichier lorsque l'au moins un fichier est catégorisé comme étant non digne de confiance par l'outil de vérification (120), en effectuant au moins l'une des actions qui suivent :
l'interdiction du transfert de l'au moins un fichier (110) au dispositif informatique d'utilisateur (140) ;
la suppression de l'au moins un fichier (110) ; et
la mise en quarantaine de l'au moins un fichier (110).

4. Système selon l'une quelconque des revendications précédentes, dans lequel l'outil de vérification est en outre configuré pour :
déterminer que le certificat DS est valide en validant le certificat de centre émetteur à l'aide de la pluralité de certificats.

5. Système selon la revendication 1, dans lequel la vérification du fait que l'au moins un fichier (110) présente l'intégrité de fichier requise inclut :
l'obtention d'un total de contrôle de signature numérique décryptée à partir de la signature numérique ;
l'obtention d'un algorithme de total de contrôle à partir du certificat DS ;
le calcul d'un total de contrôle de fichier de l'au moins un fichier (110) en utilisant l'algorithme de total de contrôle ;
la comparaison du total de contrôle de signature numérique avec le total de contrôle de fichier en utilisant une clé publique dans le certificat DS ; et
si le total de contrôle de signature numérique concorde avec le total de contrôle de fichier, la détermination du fait que l'au moins un fichier (110) présente l'intégrité de fichier requise.

6. Système selon l'une quelconque des revendications 4 et 5, dans lequel la validation du certificat de centre émetteur inclut :
la construction d'une chaîne de certificats à partir de la pluralité de certificats ;
la vérification du fait que chacun de la pluralité de certificats dans la chaîne de certificats présente une intégrité de certificat requise ;
la vérification du fait que l'un de la pluralité de certificats dans la chaîne de certificats concerne le certificat de centre émetteur ;
la vérification du fait qu'un certificat de racine est le dernier certificat dans la chaîne de certificats ; et
si chacun de la pluralité de certificats dans la chaîne de certificats présente l'intégrité de certificat requise, si l'un de la pluralité de certificats dans la chaîne de certificats concerne le certificat de centre émetteur et si le certificat de racine est le dernier certificat dans la chaîne de certificats, la détermination du fait que le certificat de centre émetteur est valide.

7. Système selon l'une quelconque des revendications 1 à 6, dans lequel la recherche des données de certificat digne de confiance concernant les données de certificat DS inclut :
l'identification des données de certificat DS dans les données de certificat digne de confiance, dans lequel les données de certificat DS incluent au moins une information parmi le certificat DS, un ID du certificat DS et un vecteur de valeurs qui identifient le certificat DS ; ou
l'identification d'un certificat de centre de certification en provenance d'un centre de certification qui a émis le certificat DS dans les données de certificat digne de confiance.

8. Système selon la revendication 7, dans lequel la base de données de certificats (130) est en outre configurée pour stocker des données de révocation qui concernent la pluralité de certificats et dans lequel la détermination du fait que le certificat DS est digne de confiance comprend en outre :
la comparaison du certificat DS avec les données de révocation afin de déterminer que le certificat DS n'est pas expiré.

9. Système selon la revendication 1, dans lequel l'outil de vérification (120) est en outre configuré pour détecter l'attaque en déterminant que l'au moins un outil système ou que le composant qui est utilisé par l'au moins un outil système est malveillant.

10. Système selon la revendication 3, dans lequel l'outil de garantie de sécurité (125) est en outre configuré pour :
déterminer une trame temporelle pendant laquelle l'attaque est survenue ;
déterminer un jeu suspect de fichiers sur la base de la trame temporelle ; et
invoquer l'outil de vérification (120) afin de catégoriser le jeu suspect de fichiers.

11. Procédé pour répondre à une attaque sur un dispositif informatique d'utilisateur (140), le procédé comprenant :
la détection d'une attaque sur le dispositif informatique d'utilisateur (140) à l'encontre d'au moins un outil système dont l'objet est de vérifier des signatures numériques de fichiers en identifiant une modification ou un remplacement de l'au moins un outil système ou d'un composant qui est utilisé par l'au moins un outil système ;
l'obtention d'au moins un fichier (110), l'au moins un fichier (110) étant destiné à être analysé par l'au moins un outil système pour vérifier des signatures numériques de fichiers, l'au moins un fichier (110) incluant une signature numérique, la signature numérique incluant un certificat DS, dans lequel le certificat DS inclut des données de centre émetteur et des données de certificat DS ;
la détermination du fait que le certificat DS est valide en vérifiant que le certificat DS présente une intégrité de certificat requise ;
la détermination du fait que la signature numérique est valide en vérifiant que l'au moins un fichier (110) présente une intégrité de fichier requise et que le certificat DS est valide ; et
si le certificat DS est valide, la détermination du fait que le certificat DS est digne de confiance en trouvant les données de certificat de confiance qui concernent les données de certificat DS.

12. Procédé selon la revendication 11, comprenant en outre :
la recherche dans une base de données de fichiers d'un ID de l'au moins un fichier (110) ; et
la détermination de si l'au moins un fichier (110) est digne de confiance ou non sur la base de la recherche dans la base de données de fichiers.

13. Procédé selon la revendication 11 ou 12, comprenant en outre :
la catégorisation de l'au moins un fichier (110) comme étant non digne de confiance lorsque la signature numérique est invalide ou que le certificat DS est invalide ou non digne de confiance ; et
la restriction de l'accès par un dispositif informatique d'utilisateur (140) à l'au moins un fichier (110) lorsque l'au moins un fichier (110) est catégorisé comme étant non digne de confiance, en effectuant au moins l'une des actions qui suivent :
l'interdiction du transfert de l'au moins un fichier (110) au dispositif informatique d'utilisateur (140) ;
la suppression de l'au moins un fichier (110) ; et
la mise en quarantaine de l'au moins un fichier (110).
